(19) Europäisches Patentamt
European Patent Office
Office européen des brevets

(11) Publication number : **0 503 864 A2**

(12) **EUROPEAN PATENT APPLICATION**

(21) Application number : **92301961.6**

(51) Int. Cl.[5] : **C09D 163/00,** C09D 177/00

(22) Date of filing : **09.03.92**

(30) Priority : **12.03.91 GB 9105127**

(43) Date of publication of application : **16.09.92 Bulletin 92/38**

(84) Designated Contracting States : **AT BE CH DE ES FR GB IT LI NL**

(71) Applicant : **CIBA-GEIGY AG**
**Klybeckstrasse 141**
**CH-4002 Basel (CH)**

(72) Inventor : **Bennett, Russell**
**8 St. Thomas Close**
**Camberton, Cambridge (GB)**

(74) Representative : **Sparrow, Kenneth D. et al**
**CIBA-GEIGY PLC. Patent Department, Central Research, Hulley Road**
**Macclesfield, Cheshire SK10 2NX (GB)**

(54) **Coating compositions.**

(57) A powder coating composition comprising A) a solid epoxy resin, viz an epoxy resin having an average of more than one vicinal epoxy group per molecule, and an average epoxide equivalent weight greater than 500 ; B) a texturizing agent comprising a polyamide reaction product of 1) a dimerized $C_{12}$-$C_{20}$ unsaturated fatty acid, 2) a $C_2$-$C_{10}$ difunctional amine and 3) a $C_1$-$C_{20}$ monofunctional carboxylic acid, the polyamide reaction product having no residual amine or acidic functionality ; and, C) a curing agent for the epoxy resin, component A).

EP 0 503 864 A2

Jouve, 18, rue Saint-Denis, 75001 PARIS

The present invention relates to coating compositions, in particular to powder coating compositions which provide a uniform textured finish.

Use of traditional liquid coating compositions is increasingly being challenged, in the commercial areas, by the application of coatings via powder coatings.

In the context of decorative coatings, there is a need for powder coating compositions which are able to provide finishes having a uniform texture.

Attempts have been made to meet this requirement by incorporating into the film-forming resin component of a powder coating composition, finely divided solid fillers of small mean particle size. Such solid filler additives provide a textured effect to the final film by virtue of their presence on the surface of the film. The use of such fillers, however, can result in loss of performance of the film, e.g. in terms of the impact strength of the film. Moreover, many solid epoxy resins flow too well to give a textured finish and, if powder coating compositions comprising a solid epoxy resin and a solid filler are dry-blended, e.g. in a roller, the mixing is not very efficient, giving rise to a final finish having a non-uniform texture.

We have now found certain powder coating compositions which can be formulated into a homogeneous mass and can produce final coatings having improved surface texture properties.

Accordingly, the present invention provides a powder coating composition comprising A) a solid epoxy resin, viz an epoxy resin having an average of more than one vicinal epoxy group per molecule, and an average epoxide equivalent weight greater than 500; B) a texturizing agent comprising a polyamide reaction product of 1) a dimerized unsaturated fatty acid having 12 to 20 carbon atoms, 2) a difunctional amine having 2 to 10 carbon atoms and 3) a monofunctional carboxylic acid having 1 to 20 carbon atoms, the polyamide product having no residual amine or acidic functionality so that it is not reactive with the epoxy resin, component A); and C) a curing agent for the epoxy resin, component A).

The solid epoxy resin, component A), may be produced by advancing any liquid polyepoxide resin with a molecular deficiency of a difunctional compound having two groups which are reactive with epoxide groups.

The liquid polyepoxide starting materials may be e.g., those containing at least two terminal groups of formula:

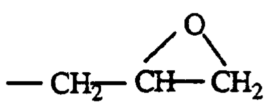

I

directly attached to an atom or atoms of oxygen, nitrogen or sulphur.

As examples of such resins there may be mentioned polyglycidyl esters, obtained by reaction of a compound containing two or more carboxylic acid groups per molecule, with epichlorohydrin or glycerol dichlorohydrin, in the presence of an alkali. Such polyglycidyl esters may be derived from aliphatic polycarboxylic acids, e.g. oxalic acid, succinic acid, glutaric acid, pimelic acid, suberic acid, azelaic acid, sebacic acid, and dimerised or trimerised linoleic acid; from cycloaliphatic polycarboxylic acids such as tetrahydrophthalic acid, 4-methyltetrahydrophthalic acid, hexahydrophthalic acid, and 4-methylhexa-hydrophthalic acid; and from aromatic polycarboxylic acids, such as phthalic acid, isophthalic acid, and terephthalic acid.

Further examples are polyglycidyl ethers obtainable by reaction of a compound containing at least two free alcoholic hydroxyl and/or phenolic hydroxyl groups per molecule with epichlorohydrin or glycerol dichlorohydrin under alkaline conditions or, alternatively, in the presence of an acid catalyst and subsequent treatment with alkali. These ethers may be made from acyclic alcohols such as ethylene glycol, diethylene glycol, and higher poly(oxyethylene) glycols, propane-1,2-diol and poly(oxypropylene) glycols, propane-1,3-diol, butane-1,4-diol, poly(oxytetramethylene)glycols, pentane-1,5-diol, hexane-2,4,6- triol, glycerol-1,1,1-trimethylolpropane, pentaerythritol, sorbitol, and poly(epichlorohydrin); from cycloaliphatic alcohols such as resorcitol, quinitol, bis(4-hydroxycyclohexyl)methane, 2,2-bis(4-hydroxycyclohexyl) propane, and 1,1-bis(hydroxymethyl)-cyclohex-3-ene; and from alcohols having aromatic nuclei, such as N,N-bis (2-hydroxyethyl)aniline and p,p$^1$-bis(2-hydroxyethyl-amino)diphenylmethane. Or they may be made from mononuclear phenols, such as resorcinol and hydroquinone, and from polynuclear phenols, such as bis(4-hydroxyphenol)methane, 4,4$^1$-dihydroxydiphenyl, bis(4-hydroxyphenyl) sulphone, 1,1,2,2-tetrakis(4-hydroxyphenyl)-methane, 2,2-bis(4-hydroxyphenyl) propane, 2,2-bis (3,5-dibromo-4-hydroxyphenyl)propane (otherwise known as tetrabromobisphenol A), and novolaks formed from aldehydes such as formaldehyde, acetaldehyde, chloral, and furfuraldehyde, with phenols such as phenol itself, and phenol substituted in the ring by chlorine atoms or by alkyl groups each containing up to nine carbon atoms, such as 4-chlorophenol, 2-methylphenol, and 4-tert.butylphenol.

Poly(N-glycidyl) compounds include, for example, those obtained by dehydrochlorination of the reaction products of epichlorohydrin with amines containing at least two amino-hydrogen atoms such as aniline, n-butylamine, bis(4-aminophenyl)methane, and bis(4-methylaminophenyl)methane; triglycidyl isocyanurate; and N,N[1]-diglycidyl derivatives of cyclic alkylene ureas, such as ethyleneurea and 1,3-propyleneurea, and hydantoins such as 5,5-dimethylhydantoin.

Examples of poly(S-glycidyl) compounds are di-S-glycidyl derivatives of dithiols such as ethane-1,2-dithiol and bis(4-mercaptomethylphenyl)ether.

Other liquid polyepoxides include those obtained from ethylenically unsaturated glycidyl esters of monocarboxylic acids, such as glycidyl acrylate, by homopolymerisation and by copolymerisation with $\alpha$-ethylenically unsaturated compounds such as acrylate esters, methacrylate enters, styrene, and maleic and fumaric esters.

Polyepoxides having the 1,2-epoxide groups attached to different kinds of hetero atoms may be employed, e.g. the N,N,O-triglycidyl derivative of 4-aminophenol, the glycidyl ether-glycidyl ester of salicylic acid, N-glycidyl-N[1]-(2-glycidyloxypropyl)-5,5-dimethylhydantoin, and 2-glycidyloxy-1,3-bis (5,5-dimethyl-1-glycidylhydantoin-3-yl)propane.

Also, if desired, a mixture of liquid polyepoxides may be used. Preferred polyepoxides are polyglycidyl ethers and polyglycidyl esters. Specific preferred polyepoxides are diglycidyl ethers of 2,2-bis(4-hydroxyphenyl)propane, or of bis(4-hydroxyphenyl)methane.

The liquid polyepoxide starting materials may be advanced, to give a solid epoxy resin component A), by treatment with a molecular deficiency of a difunctional material which reacts with the epoxide groups of the liquid polyepoxide, and so increases the molecular weight of the resin. Typical difunctional materials suitable for this purpose include bisphenols, especially bisphenol A and tetrabromobisphenol A; mononuclear dihydric phenols such as resorcinol; and dicarboxylic acids such as hexahydrophthalic acid.

The advancement is preferably conducted by heating the liquid polyepoxide and the difunctional material together in the presence of an advancement catalyst e.g. a quaternary phosphonium or ammonium compound, a tertiary amine or an imidazole compound e.g. ethyltriphenylphosphonium chloride, - bromide, -iodide, -acetate or -phosphate; tetrabutylphosphonium chloride, -bromide, -iodide or -acetate; benzyltrimethyl ammonium chloride or tetramethylammonium hydroxide; benzyldimethylamine or tri-isopropylamine; 2-methyl or 2-vinylimidazole; or mixtures of these.

The polyamide texturizing component, component B) of the powder coating compositions of the present invention, is the reaction product of 1) a $C_{12}$-$C_{20}$ dimerized fatty acid, 2) a $C_2$-$C_{10}$ di-amine and 3) a $C_1$-$C_{20}$ mono-carboxylic acid, the reaction product having no residual carboxyl or amino functionality.

Examples of the $C_{12}$-$C_{20}$ dimerized fatty acid component reactants include dimerized dodecenoic acid, tetradecenoic acid, linoleic acid, linolenic acid, oleic acid and eicosenic acid.

Examples of $C_2$-$C_{10}$ difunctional amine reactants include ethylene diamine, 1,3-propylene diamine, 1,4-butylene diamine, 1,6-hexylene diamine, 1,8-octylene diamine and 1,10-decylene diamine.

Examples of $C_1$-$C_{20}$ monofunctional carboxylic acids include formic acid, acetic acid, propionic acid, n-butanoic acid, n-hexanoic acid, n-octanoic acid, n-decanoic acid, n-dodecanoic acid, n-tetradecanoic acid, n-hexadecanoic acid, n-octadecanoic acid and eicosanoic acid.

Preferably, component B) is a non-reactive polyamide derived from a mixture of monocarboxylic acids having a molecular weight of 50 to 300, dicarboxylic acids having a molecular weight of 400 to 700, and diamines having a molecular weight from 45 to 200.

The polyamide reactants are preferably reacted in substantially the stoichiometric proportions required, consistent with the requirement that the reaction product must not contain any significant amount of residual carboxyl or amino functionality.

Based on the weight of the epoxy resin component, the amount of the texturizing component present in the powder coating compositions of the invention, conveniently ranges from 1 to 30% by weight, preferably from 2 to 20% by weight.

The curing agent, component C) of the powder coating compositions of the present invention, may be an aliphatic amine; dicyandiamide; an aromatic amine such as bis(3-aminophenyl)- or bis (4-aminophenyl)-sulphone or bis(4-aminophenyl) methane, which are usually used together with an accelerator such as a $BF_3$-amine complex; or, less preferably a carboxylic acid such as a polycarboxylic acid anhydride, methylbicyclo [2,2,1]-hept-5-ene-2,3-dicarboxylic acid anhydride, pyromellitic acid dianhydride and benzophenone tetracarboxylic acid dianhydride; phenol compounds; e.g phenol novolaks or polyesters, e.g. those derived from aromatic polycarboxylic acids such as phthalic acid or terephthalic acid and polyols e.g. ethylene glycol or trimethylol propane.

The amount of the curing agent, component C), present in the powder coating compositions of the invention may range from up to 80% by weight preferably from 4 to 50% by weight, based on the epoxy resin component, component A).

The powder coating compositions of the present invention may also contain one or more further conventional additives such as particulate fillers or pigments e.g. barytes, titanium dioxide, carbon black, silica flow,

calcium carbonate or mixtures of these; flow control agents e.g. polyacrylates such as ethyl acrylate/2-ethylhexyl acrylate copolymers and poly(butyl acrylate), texture control additives, e.g. glass microspheres, metal powders and polymer powders; air release agents e.g. benzoin; gloss control additives e.g. amorphous silicas and silicic acid; and slip aids.

The powder coating compositions of the present invention may be prepared by simple mixing of the ingredients, for example in a ball mill. Alternatively, the various components may be melted together, conveniently in an extruder such as a Buss Ko-Kneader, and then the cooled mass may be ground to a powder. The powder compositions so obtained preferably have a particle size ranging from 5 to 100, especially 20 to 50 micrometres.

The present invention also provides a method of coating an article comprising applying a powder coating composition of the present invention to the article; and curing the coating so applied to the article, thereby providing an article coated with a uniform, textured coating. The present invention further provides an article so coated.

The powder coating composition may be applied on to the article, e.g. a metal, glass, plastics or fibre-reinforced plastics substrate, by electrostatic spraying or by using a fluidized bed, which may be electrostatic. The composition is preferably applied by means of an electrostatic spray gun using, e.g., a voltage ranging from 10 to 100 kilovolts. The thickness of the coating applied may be varied by varying the number of passes of the gun over the surface to be coated. After application of the powder composition of the invention, the coated article is baked at a temperature ranging e.g. from 150°C to 250°C, for a time ranging e.g. from 5 to 25 minutes to cure the powder coating and provide a uniform, textured finish.

The following Examples further illustrate the present invention.

In the Examples, epoxy resins are used having the formula:

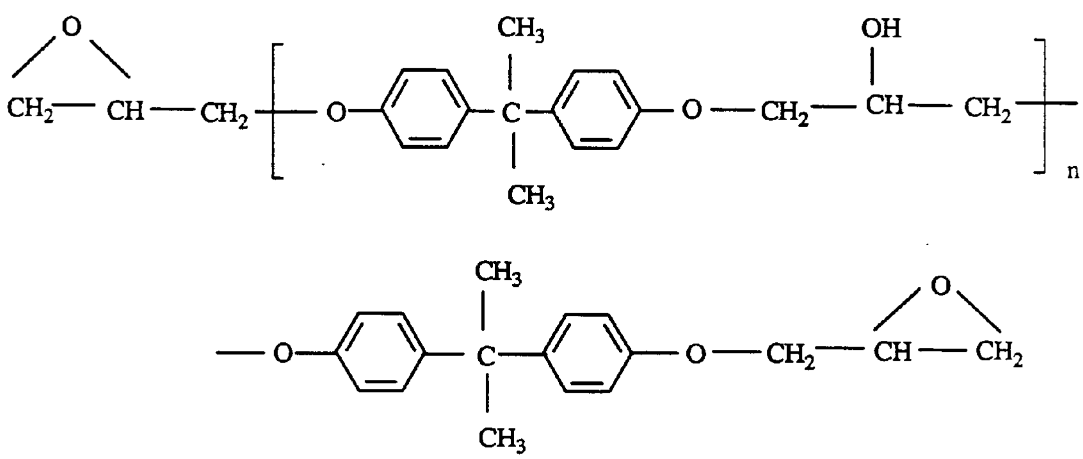

(1)

Resin I

Is an advanced (chain extended) bisphenol A epoxy resin of formula (I) in which the average value of n is 2, its epoxide equivalent weight is 500-525, and softening point (DIN 51920) is 77-82°C.

Resin II

Is an advanced (chain extended) bisphenol A epoxy resin of formula (1) in which the average value of n is 3, its epoxide equivalent weight is 570-595 and the softening point (DIN 51920) is 82-90°C.

Resin III

Is an advanced (chain extended) bisphenol of A epoxy resin of formula (1) in which the average value of n is 4, its epoxide equivalent wieght is 715-750; and its softening point (DIN 51920) is about 95-101°C.

Example 1

A commercial grade (Resin III) of advanced diglycidyl ether of Bisphenol A (2000 g) is charged to a 5 litre, round bottomed, glass reaction flask fitted with a 5 necked lid, a water-cooled condenser, nitrogen purge, stirrer, thermocouples and a solids addition funnel. The stirred resin is gently heated to 140°C under nitrogen purge. After 1 hour, the temperature is stable at 140°C and the addition of UNI-REZ 133 polyamide (500g) is initiated. After 30 minutes, with the temperature at 140°C, the addition of the polyamide to the stirred flask contents is complete. The temperature and mixing are maintained for a further 30 minutes to ensure a homogeneous mix. After 30 minutes the flask contents are discharged. After cooling, the resin is pulverised using a Christy Hunt Spruemajor.

The product is a granulated solid of orange colour and an epoxide value of 1.1 mol/kg.

Example 2 to 7

Using the procedure described in Example 1, but replacing UNI-REZ 133 polyamide, with one of the following polyamides

| | | |
|---|---|---|
| Example 2 | Versamid 791 | (Cray Valley Products) |
| Example 3 | Versamid 933 | (" " " ) |
| Example 4 | Uni-rez 106 | (Union Camp Chemicals) |
| Example 5 | Uni-rez 108 | (" " " ) |
| Example 6 | Uni-rez 500 | (" " " ) |
| Example 7 | Uni-rez 120 | (" " " ) |

the corresponding epoxide resin/polyamide resin blend is obtained.

Examples 8 and 9

Using the procedure described in Example 1, but replacing Resin III by Resin II or Resin I epoxy resins, Uni-rez 133 is blended with each of the resins II or III to produce the corresponding epoxide resin/polyamide resin blend.

Example 10

A commercial grade (Resin III) of advanced diglycidyl ether of Bisphenol A (4800 g), and Uni-rez 133 (1200 g - Union Camp Chemicals) are placed in a plastic bucket, sealed and the bucket then placed on mechanical rollers to ensure a homogeneous dry blend. The dry blend is then extruded in a Buss-Ko-Kneader type PR 46 single screw extruder with zone 1 at 40°C and zone 2 at 85°C. The feeding hopper is set at 4 and the screw speed at 10. The extrudate is immediately cooled on a cold table and then pulverised to a fine powder using a Christy Hunt Spruemaster.

The product is a powdered solid with an epoxide value of 1.1 mol/kg.

Example 11

Formulation and Processing of Coatings

Formulation weights, as per Table 1, of modified epoxy resin, hardener, flow agent masterbatch (GT 2874),

air release additive (benzoin), titanium dioxide pigment, any additional epoxy resin and any further components are placed in a plastic bucket, sealed and placed on mechanical rollers to ensure a homogeneous dry blend. The dry blend formulations are then extruded in a Buss-Ko-Kneader Type PR 46 single screw extruder with zone 1 at 40°C and zone 2 at 85°C. The extrudate is immediately cooled on a cold table and then pulverised to a fine powder using a Christy Hunt Spruemaster. The pulverised powder is sieved through 75 micron (BS 410) laboratory test sieves. The <75 micron powder coating formulations are applied to degreased mild steel plates using a Controsion PET-SRF electrostatic spraying unit. The electrostatically coated plates are cured at 180°C in an Heraeus LUT 5050 EK vented fan oven ; residence time of the plates is 20 minutes. After removal from the oven, the plates are allowed to cool and then evaluated using the following methods:-

Appearance : Visual check of texture and other surface effects.

Surface gloss : Using a 60° angle head, the gloss reflectance of the coating is measured using a gloss meter.

Coating thickness : Determined using a Elecometer 150 FN minitector.

Methyl ethyl ketone rubs. A piece of paper-cloth is soaked in MEK and with firm pressure rubbed backwards and forwards across the coating twenty times beneath the forefinger (one rub = one forward plus one backward movement). The damage done to the film is then assessed using the following table:-

| Rate | Description |
|---|---|
| 0 | No film damage |
| 1 | Very slight removal, only noticeable by white bloom on cloth |
| 2 | Slight removal, just noticeable on coating |
| 3 | Some removal of coating |
| 4 | Definite removal of coating |
| 5 | Total coating removal |

Reverse impact resistance : Determined to (BS 3900 : E3) using a R.E.L. falling weight impact tester.

Coating whiteness : Determined using a Dr Lange WBI.

Coating distensibility. A ball is mechanically forced into the reverse side (non-coated side) of the test plate causing increasing coating deformation as the ball is forced further into the plate. The quoted figure is the distance (in cm) that the ball travels, which is identical to the distance the film is deformed, before the film fails (cracks).

The results of these tests are detailed in Table 1.

TABLE I

| EPOXY RESIN (g) | POLYAMIDE (g) | INCORPORATION ROUTE | HARDENER A (g) | HARDENER B (g) | HARDENER C (g) | 2 METHYL IMIDAZOLE (g) | GT 2874 (g) | $TiO_2$ (g) | BENZOIN (g) | FURTHER RESIN III (g) | SURFACE GLOSS 60° ANGLE (%) | COATING THICKNESS (microns) | MEK RUB TEST | REVERSE IMPACT (mm) | COATING WHITENESS | COATING DISTENSIBILITY (cm) | APPEARANCE |
|---|---|---|---|---|---|---|---|---|---|---|---|---|---|---|---|---|---|
| RESIN III (482.4) | VERSAMID 791 (120.6) | 1 | 37 | - | - | - | 160 | 440 | 8 | - | 94 | 42 | 1 | 3 | 80.0 | 0.51 | Very light open texture |
| RESIN III (482.4) | VERSAMID 933 (120.6) | 1 | 37 | - | - | - | 160 | 440 | 8 | - | 57 | 60 | 1-2 | <1 | 82.1 | 0.11 | Even texture |
| RESIN III (482.4) | UNIRES 106 (120.6) | 1 | 37 | - | - | - | 160 | 440 | 8 | - | 20 | 90 | 1 | <1 | 81.1 | 0.08 | Even, heavy micro texture |
| RESIN III (482.4) | UNIRES 133 (120.6) | 1 | 37 | - | - | - | 160 | 440 | 8 | - | 15 | 50 | 1-2 | <1 | 79.0 | 0.33 | Even, heavy micro texture |
| RESIN III (482.4) | UNIRES 500 (120.6) | 1 | 37 | - | - | - | 160 | 440 | 8 | - | 33 | 60 | 1-2 | <1 | 81.9 | 0.13 | Even, heavy texture |
| RESIN III (160) | UNIRES 133 (40) | 1 | 37 | - | - | - | 160 | 440 | 8 | 403 | 15 | 60 | 1 | 2 | 79.4 | 0.5 | Even, heavy micro texture |
| RESIN III (40) | UNIRES 133 (10) | 1 | 37 | - | - | - | 160 | 440 | 8 | 553 | 38 | 50 | 1 | 5 | 81.3 | 0.58 | Even, heavy texture |
| RESIN III (256) | UNIRES 133 (64) | 1 | - | 400 | - | - | 80 | 440 | 8 | - | 37 | 50 | 0-1 | 1 | 76.0 | 0.57 | Even, heavy texture |
| RESIN III (80) | UNIRES 133 (20) | 1 | - | 400 | - | - | 80 | 440 | 8 | 220 | 57 | 50 | 0-1 | 3 | 79.8 | >1.0 | Even texture |
| RESIN III (40) | UNIRES 133 (10) | 1 | - | 400 | - | - | 80 | 440 | 8 | 270 | 77 | 50 | 0-1 | 4 | 81.6 | >1.0 | Light open texture |

| EPOXY RESIN (g) | POLYAMIDE (g) | INCORPORATION ROUTE | HARDENER A (g) | HARDENER B (g) | HARDENER C (g) | 2 METHYL IMIDAZOLE (g) | GT 2874 (g) | $TIO_2$ (g) | BENZOIN (g) | FURTHER RESIN III (g) | SURFACE GLOSS 60° ANGLE (%) | COATING THICKNESS (microns) | MEK RUB TEST | REVERSE IMPACT (mm) | COATING WHITENESS | COATING DISTENSIBILITY (cm) | APPEARANCE |
|---|---|---|---|---|---|---|---|---|---|---|---|---|---|---|---|---|---|
| RESIN I (482.4) | UNIRES 133 (120.6) | 1 | 37 | - | - | - | 160 | 440 | 8 | - | 23 | 60 | 1-2 | 3 | 80.5 | 0.22 | Even, heavy texture |
| RESIN II (482.4) | UNIRES 133 (120.6) | 1 | 37 | - | - | - | 160 | 440 | 8 | - | 21 | 60 | 1-2 | 3 | 80.0 | 0.29 | Even, heavy texture |
| RESIN III (160) | UNIRES 108 (40) | 1 | 37 | - | - | - | 160 | 440 | 8 | 403 | 55 | 100 | 1-2 | 2 | 82.2 | 0.66 | Very heavy texture |
| RESIN III (160) | UNIRES 120 (40) | 1 | 37 | - | - | - | 160 | 440 | 8 | 403 | 88 | 100 | 1-2 | <1 | 82.8 | 0.61 | Very light texture, almost smooth. |
| RESIN III (256) | UNIRES 108 (64) | 1 | - | 400 | - | - | 80 | 440 | 8 | - | 90 | 70 | 0-1 | 1 | 80.7 | 0.76 | Even, medium texture |
| RESIN III (25.6) | UNIRES 108 (6.4) | 1 | - | 400 | - | - | 80 | 440 | 8 | 288 | 99 | 80 | 1 | 1 | 84.6 | 0.85 | Pin-holed, medium, open texture |
| RESIN III (256) | UNIRES 120 (64) | 1 | - | 400 | - | - | 80 | 440 | 8 | - | 93 | 70 | 1 | 2 | 81.1 | 0.53 | Pin-holed, light open texture |
| RESIN III (25.6) | UNIRES 120 (6.4) | 1 | - | 400 | - | - | 80 | 440 | 8 | 288 | 97 | 70 | 0-1 | 2 | 84.3 | >1.0 | Pin-holed, light open texture |
| RESIN III (482.4) | UNIRES 133 (120.6) | 2 | 37 | - | - | - | 160 | 440 | 8 | - | 9 | 80 | 1-2 | 1 | 77.0 | 0.25 | Even, heavy micro texture |
| RESIN III (160) | UNIRES 133 (40) | 2 | 37 | - | - | - | 160 | 440 | 8 | 403 | 43 | 80 | 1-2 | 1 | 82.0 | 0.55 | Even, heavy texture |
| RESIN III (40) | UNIRES 133 (10) | 2 | 37 | - | - | - | 160 | 440 | 8 | 553 | 78 | 45 | 2-3 | 5 | 80.5 | 0.55 | Even, hazy, light texture |
| RESIN III (4) | UNIRES 133 (1) | 2 | 37 | - | - | - | 160 | 440 | 8 | 598 | 84 | 50 | 1-2 | 5 | 84.0 | 0.6 | Hazy, open, light texture |

| EPOXY RESIN (g) | POLYAMIDE (g) | INCORPORATION ROUTE | HARDENER A (g) | HARDENER B (g) | HARDENER C (g) | 2 METHYL IMIDAZOLE (g) | GT 2874 (g) | $TiO_2$ (g) | BENZOIN (g) | FURTHER RESIN III (g) | SURFACE GLOSS 60° ANGLE (%) | COATING THICKNESS (microns) | MEK RUB TEST | REVERSE IMPACT (mm) | COATING WHITENESS | COATING DISTENSIBILITY (cm) | APPEARANCE |
|---|---|---|---|---|---|---|---|---|---|---|---|---|---|---|---|---|---|
| RESIN III (256) | UNIRES 133 (64) | 2 | - | 400 | - | - | 80 | 440 | 8 | - | 45 | 70 | 1 | 1 | 72.9 | 0.4 | Even, heavy texture |
| RESIN III (80) | UNIRES 133 (20) | 2 | - | 400 | - | - | 80 | 440 | 8 | 220 | 70 | 60 | 0-1 | 3 | 81.0 | 0.5 | Even texture |
| RESIN III (4) | UNIRES 133 (1) | 2 | - | 400 | - | - | 80 | 440 | 8 | 315 | 88 | 45 | 0-1 | 5 | 81.4 | >1.0 | Hazy, very light texture |
| RESIN III (482.4) | UNIRES 133 (120.6) | 2 | - | - | 290 | 8 | 160 | 440 | 8 | - | 65 | 50 | 1 | 4 | 47.0 | 0.6 | Pin-holed, heavy texture |
| RESIN III (160) | UNIRES 133 (40) | 2 | - | - | 290 | 8 | 160 | 440 | 8 | 403 | 40 | 45 | 1 | 5 | 54.0 | 0.55 | Even, heavy micro texture |
| RESIN III (4) | UNIRES 133 (1) | 2 | - | - | 290 | 8 | 160 | 440 | 8 | 598 | 78 | 45 | 1 | 5 | 62.0 | 0.61 | Even, open texture |
| RESIN III (603) | - | - | 37 | - | - | - | 160 | 440 | 8 | - | 90 | 60 | 1-2 | 5 | 85.2 | 0.89 | Almost smooth film |
| RESIN III (320) | - | - | - | 400 | - | - | 80 | 440 | 8 | - | 93 | 90 | 0-1 | 4 | 80.9 | 0.96 | Almost smooth film |
| RESIN III (500) | - | - | - | - | 290 | 8 | 160 | 440 | 8 | - | 85 | 60 | 0 | 5 | 63.0 | 0.65 | Almost smooth film |

HARDENER A = (MODIFIED DICYANDIAMIDE)
B = (CARBOXY POLYESTER RESIN)
C = (PHENOL NOVOLAC)

Example 12

Testing reaction of epoxy and polyamide

The polyamides specified are not reactive with respect to epoxy resins at the temperatures and times specified. A commercial grade (Resin III) of advanced diglycidyl ether of Bisphenol A (1000 g), and UNI-REZ 133 polyamide (54 g) are charged to a 2 litre round bottomed, glass reaction flask fitted with a 5 necked lid, a water-cooled condenser, nitrogen purge, stirrer, and thermocouples. Under nitrogen, purge heating is initiated to the stirred flask contents. When the temperature has reached 120°C, the heating is adjusted to maintain 120°C within the stirred flask contents. After 6 hows the flask contents are discharged. After cooling, the epoxide value is determined.

This process is repeated with the holding temperature adjusted for 130°C, 140°C, 150°C and 160°C.

Table 2 shows the effect of holding temperature on the final epoxide value after 6 hours at the specified temperature.

TABLE 2

| Holding Temperature (°C) | Epoxide Value (mol/kg) |
|---|---|
| 25 | 1.26 |
| 120 | 1.26 |
| 130 | 1.26 |
| 140 | 1.26 |
| 150 | 1.25 |
| 160 | 1.25 |

## Claims

1. A powder coating composition comprising A) a solid epoxy resin, viz an epoxy resin having an average of more than one vicinal epoxy group per molecule, and an average epoxide equivalent weight greater than 500; B) a texturizing agent comprising a polyamide reaction product of 1) a dimerized $C_{12}$-$C_{20}$ unsaturated fatty acid, 2) a $C_2$-$C_{10}$ difunctional amine and 3) a $C_1$-$C_{20}$ monofunctional carboxylic acid, the polyamide reaction product having no residual amine or acidic functionality; and, C) a curing agent for the epoxy resin, component A).

2. A composition according to claim 1 in which the solid epoxy resin is produced by advancing a polyglycidyl ether or polyglycidyl ester.

3. A composition according to claim 2 in which the polyglycidyl ether is a diglycidyl ether of 2,2-bis(4-hydroxyphenyl) propane or of bis(4-hydroxyphenyl) methane.

4. A composition according to any of the preceding claims in which the solid epoxy resin is produced by advancing a liquid polyepoxide compound with a molecular deficiency of a difunctional material having two groups which react with the epoxide groups of the liquid polyepoxide.

5. A composition according to claim 4 in which the difunctional material is a bisphenol, a mononuclear dihydric phenol or a dicarboxylic acid.

6. A composition according to claim 5 in which the bisphenol is bisphenol A or tetrabromobisphenol A.

7. A composition according to any of the preceding claims in which the texturizing agent, component B), is a non-reactive polyamide derived from a mixture of monocarboxylic acids having a molecular weight of 50 to 300, dicarboxylic acids having a molecular weight of 400 to 700 and diamines having a molecular weight of 45 to 200.

8. A composition according to any of the preceding claims in which the amount of component B) present ranges from 2 to 20% by weight, based on the weight of component A).

9. A composition according to any of the preceding claims in which the component C) is an aliphatic amine; dicyandiamide; a mixture of an aromatic amine and an accelerator, a mixture of a phenolic functional compound and an accelerator, a polyanhydride; or a carboxylic polyester.

10. A composition according to any of the preceding claims in which the amount of the component C) present ranges from 4 to 50% by weight, based on the weight of component A).

11. A composition according to any of the preceding claims in which one or more further additives are present.

12. A composition according to claim 11 in which the further additives are particulate fillers or pigments; flow control agents; texture control additives; air-release agents; gloss control additives; and slip aids.

13. A method of coating an article comprising applying a powder coating composition, as claimed in any of the preceding claims; to the article; and curing the coating so applied.

14. An article when coated by a method claimed in claim 13.